Europäisches Patentamt

European Patent Office

Office européen des brevets

(11) Publication number: **0 500 122 A1**

# EUROPEAN PATENT APPLICATION

(21) Application number: **92102938.5**

(22) Date of filing: **21.02.92**

(51) Int. Cl.5: **C03B 37/023**, C03B 5/02, B01J 6/00, C03C 3/32

number of Italian priority : TO91 A 000124.

(30) Priority: **22.02.91**

(43) Date of publication of application:
**26.08.92 Bulletin 92/35**

(84) Designated Contracting States:
**DE FR GB IT**

(71) Applicant: **SIP SOCIETA ITALIANA PER l'ESERCIZIO DELLE TELECOMUNICAZIONI P.A.**
**Via San Dalmazzo, 15**
**I-10122 Torino(IT)**
Applicant: **SIRTI S.p.A.**
**Via G.B. Pirelli, 20**
**I-20124 Milano(IT)**

Applicant: **PIRELLI CAVI S.p.A.**
**Piazzale Cadorna, 5**
**I-20123 Milan(IT)**

(72) Inventor: **Cocito, Giuseppe**
**Via Massimo D'Azeglio, 15**
**I-10090 S. Giusto Canavese(IT)**
Inventor: **Modone, Eros**
**Via S. Anna, 30**
**I-10070 Balangero, Torino(IT)**

(74) Representative: **Riederer Freiherr von Paar zu Schönau, Anton et al**
**Lederer, Keller & Riederer, Freyung 615,**
**Postfach 26 64**
**W-8300 Landshut(DE)**

(54) **Apparatus for preparing highly mixed compositions of powdered chemical compounds in predetermined quantities.**

(57) Highly mixed compositions of powdered chemical compounds in predetermined quantities are prepared by causing reactant sublimation or evaporation in suitable crucibles and by conveying the vapours obtained into a cooled vessel, wherein they pass to solid state under powder form. Sublimation or evaporation are facilitated by high temperature and low pressure obtained in the apparatus. Heating of the individual crucibles is obtained by use of a high-frequency furnace and is controlled by ferromagnetic or electromagnetic devices.

FIG. 1

The present invention relates to industrial processes requiring the steps of grinding solid chemical compounds, with subsequent mixing of powders in order to obtain mixtures of finely powdered and highly mixed compounds. Said operations are preliminary to numerous technological processes, namely in manufacturing glasses for optical applications. More particularly the invention concerns an apparatus for preparing highly mixed compositions of powdered chemical compounds in predetermined quantities.

Among the possible processes, reference will be made to a process for manufacturing heavy metal fluoride glasses, which are now used in interesting applications, since their transparency extends up to the spectral region of the mid-infrared, i.e. to a wavelength of about 10 $\mu$m.

Commercial hyperpure reactants are generally supplied as crystals of size variable from few cubic millimetres to some ten cubic millimetres. They must be subjected to long grinding to obtain as fine as possible powders, then the required quantities must be weighted and finally accurately mixed. In glass preparation granulometry of powders forming the batch and their mixing degree are very important. In fact the melting temperatures of powders are different from those of the individual reactants, since the activation energy necessary to the interaction is reached in the contact zones between the particles of the different components forming the mixture. The more numerous these zones, and consequently the smaller the particles, the lower the temperature necessary to the melting. Besides, the mixing degree determines glass homogeneity.

In the particular case of the so-called ZBLAN vitreous matrix, which acronym is formed from the initial letters of the five basic fluorides $ZrF_4$:$BaF_2$:$LaF_3$:$AlF_3$:$NaF$, the entire glass synthesis process results highly altered if the starting material is formed of insufficiently-mixed coarse particles with small exchange surfaces. In this case higher temperatures are required to reach the mixture melting, the consequence being that some components of the mixture reach an appreciable vapour pressure and therefore tend to sublimate, sometimes to evaporate, strongly modifying the percentage composition in an uncontrollable way. It is worth noting that $ZrF_4$ sublimates at 600 °C, $BaF_2$ melts at 1287 °C, $LaF_3$ melts at 1493 °C, $AlF_3$ sublimates at 1272 °C, $NaF$ melts at 992 °C.

Mechanical techniques exist for reducing particle size, such as mill grinding, and for mixing powders, such as fluid bed vibration, etc. These techniques result convenient with the ordinary reactants for oxide-based glasses. For compounds such as halides, and more particularly fluorides, any grinding operation is detrimental since they react with the materials of the devices used for grinding and mixing. Actually grinding enriches fluorides with metal impurities and oxygen under the state of oxides and oxyfluorides, which result very detrimental to optical properties of the derived glass.

It is known from the art a process for producing preforms for mid-infrared optical fibres, described in the U.S. patent No. 4,728,350, granted on the 1st March 1988 to the present Applicant, wherein solid-state halides are used as raw materials, which are heated at high temperature under the pressure conditions necessary to their passage to the aeriform state. Then the vapours are introduced, by conduits kept at the same high temperature, into a cooled tube and sent towards its wall, where they directly condense to solid state, the tube being subsequently deprived of non-halide-based based portions

Even though this process resolves the problem of reducing the size of particles and of the mixing between the various reactants, the product obtained is particularly suitable to manufacturing optical fibre preforms and the apparatus used is not equipped with means adapted to effect a good control of the percentage composition of the mixture.

Said disadvantages are overcome by the apparatus provided by the present invention, which allows preparation of highly mixed compositions of powdered chemical compounds in predetermined quantities, starting with materials under granular form, avoiding intermediate manipulations of the reactants and pollution by oxydic and metallic impurities.

The main object of the invention is to provide an apparatus for preparing highly mixed compositions of powdered chemical compounds in predetermined quantities as described in the characterising part of claim 1.

The foregoing and other characteristics of the present invention will be made clearer by a preferred embodiment thereof given by way of a non-limiting example, and by the annexed drawing, wherein:

- Fig.1 is a longitudinal sectional view of the apparatus;
- Fig.2 is a detail denoted by CA in Fig.1.

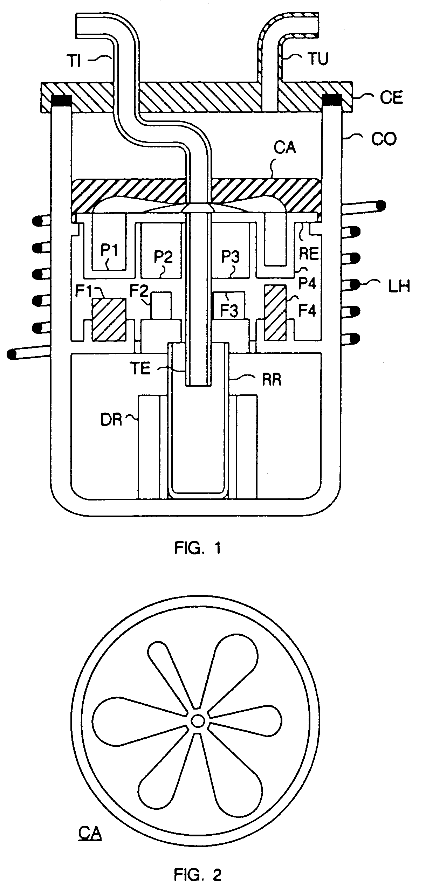

The apparatus shown in Fig.1 consists of a cylindrical vessel CO, closed at the top with a lid CE, traversed by an input tube TI and an output tube TU. The output tube, which can be connected to a vacuum pump, creates the desired pressure inside vessel CO and the input tube allows inlet of the appropriate gases so at to produce different types of atmospheres or combinations of same: an inert atmosphere, using $N_2$ or Ar; a reactive atmosphere using $NF_3$,$SF_6$,$F_2$,$CF_4$; a ionic atmosphere using Ar +. The use of reactive atmospheres is useful to eliminate oxydic fractions and hydroxyl groups, while the addition of ions Ar + improves the effects of reactive atmosphere facilitating its reactions with oxygen and hydroxyl groups.

Inside vessel CO there is a disc RE, placed horizontally and lying on a convenient jut of the internal surface of the vessel. Disc RE supports in turn a determined number of crucibles P1,P2,P3,P4,.., e.g. six, approximately arranged along a circumference and an effusing tube TE placed in the centre. The crucibles, wherein the sublimation or the evaporation of the basic reactants for glass manufacture take place, and the effusing tube, which introduces the mixture of the vapours produced, are screwed to disc RE.

Disc RE supports a round lid CA, with grooves apt to convey the vapours exiting from the individual crucibles towards the central effusing tube TE. The grooves are dimensioned so as to perfectly fit to crucible openings, which generally can present sections of different area. At the centre of the lid there is a hole for letting through the input tube TI.

Effusing tube TE conveys the vapours from the crucibles towards a vessel RR, lying on the bottom of vessel CO, surrounded by a cooling device DR, operating. e.g. with water circulation or of another type.

The reactants contained in crucibles P1,P2,P3,P4,...., generally in granular or crystal shape are sublimated or evaporated thanks to low pressure, obtained through tube TU by means of an external vacuum pump, and to high temperature generated by a high-frequency furnace, whose induction coil LH is shown in the figure. This coil, placed externally to the vessel CO at the height of the crucibles, generates inside a strong alternate magnetic field, inducing strong Foucalt currents in the different portions of the apparatus, namely crucibles, tubes, lids, and the like, made with electrically conducting material. Compact graphite, or even better vitreous carbon, which stands high temperature without damage and without polluting the reactants, could be suitable materials.

Since different temperatures are required in the individual crucibles in function of the different sublimation or evaporation temperatures of the reactants contained, small blocks of a low-loss ferromagnetic material, namely high-frequency ferrite, are placed under each crucible. Said blocks, denoted by F1,F2,F3,F4,.., increase the density of force lines of the magnetic field generated by induction coil LH within themselves and in their neighbourhood, therefore they increase the density of the magnetic field traversing the near crucibles; as a consequence, they raise the induced currents and the amount of heat developed in the crucibles. By a suitable choice of block size and of their distances from the crucibles, the reactants can be brought to the required temperatures.

An opposite result can be obtained by surrounding each crucible with a turn or a solenoid short-circuited, by which force lines are fanned out, with consequent reduction in the heat developed in the crucible. The reduction can be adjusted by suitably varying the electric resistance of the turn or of the solenoid.

The vapours generated in the crucibles are led through the grooves obtained in lid CA and effusing tube TE into the vessel RR, wherein they solidify under powder shape. The quicker their passage from aeriform to solid state (with or without intermediate passage through liquid state), the finer the powders and the higher the mixing degree. Solidification is facilitated by low temperature at which vessel RR is kept by cooling device DR. The contents of the individual reactants in the mixture can be easily predetermined by conveniently choosing the size of crucible openings. In fact the quantity of vapours generated by sublimation or evaporation is proportional to the free surface of the reactant in the crucible.

The homogeneity of the mixture obtained in RR depends on many parameters, first of which the vapour path, convection motions and temperature gradients within RR and on the surfaces of TE and RR. It can be further improved by use of convenient methods, e. g. methods of the mechanical type: RR, TE movement, vibrations, et cetera.

Fig.2 shows lid CA, seen by the side with grooves, which are made in different sizes according to crucible dimensions.

It is clear that what described has been given only by way of a non-limiting example. Variations and modifications are possible without going out of the scope of the invention.

**Claims**

1. Apparatus for preparing highly mixed compositions of powdered chemical compounds in predetermined quantities, characterized in that it consists of:
   - a cylindrical vessel (CO) closed on top by a lid (CE) traversed by an input tube (TI)and an output tube (TU) to obtain the desired pressure and atmosphere inside the vessel;
   - a disc (RE), placed horizontally and lying on a jut obtained in the internal wall of the vessel (CO), which supports a certain number of crucibles (P1, P2, P3, P4, ...) approximately arranged along a circumference, and an effusing tube (TE) placed at the centre;
   - around lid (CA), which leans on said disc (RE) with grooves sized so as to allow a perfect fitting to the openings of the crucibles (P1, P2, P3, P4, ...) to convey vapours towards the central effusing tube (TE), and has a hole through which the input tube (TI) passes;
-   a vessel (RR) surrounded by a cooling device (DR), in to which vapous coming from the effusing tube (TE) are conveyed;
-   an induction coil (LH), that is wound around the cylindrical vessel (CO) at the height of the crucibles (P1, P2, P3, P4, ...)and generates inside a strong alternate magnetic field;
-   some blocks (F1, F2, F3, F4, ...) of ferromagnetic material with low loss at high frequencies, which have suitable dimensions and are placed under each crucible at suitable distance; at least said crucibles (P1, P2, P3, P4, ...), the round lid (CA) and the effusing tube (TE) consisting of electrically conducting material.

2.  Apparatus as in claim 1, characterized in that said electrically conducting material is graphite.

3.  Apparatus as in claim 1, characterized in that said electrically conducting material is vitreous carbon.

4.  Apparatus as in any of claims 1 to 3, characterized in that said ferromagnetic material is ferrite.

5.  Apparatus as in any of claims 1 to 4, characterized in that said crucibles are surrounded by short-circuited solenoids of electrically conducting material with suitable electrical resistance.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A, D | US-A-4 728 350 (COCITO) --- | | C03B37/023 |
| A | US-A-4 604 118 (BOCKO ET AL) --- | | C03B5/02 |
| A | DE-A-3 807 456 (AEG KABEL) --- | | B01J6/00 |
| A | US-A-4 253 863 (IYENGAR) --- | | C03C3/32 |
| A | US-A-4 207 834 (CANTELOUP) ----- | | |

**TECHNICAL FIELDS SEARCHED (Int. Cl.5)**

C03B
B01J
C03C

The present search report has been drawn up for all claims

| Place of search | Date of completion of the search | Examiner |
|---|---|---|
| THE HAGUE | 20 MAY 1992 | MEERTENS J. |